# EUROPÄISCHE PATENTSCHRIFT

(11) **EP 2 719 065 B1**
(45) Veröffentlichungstag und Bekanntmachung des Hinweises auf die Patenterteilung: **21.02.2018**
(21) Anmeldenummer: 12743350.6
(22) Anmeldetag: 06.06.2012
(51) Int. Cl.: H02M 3/28, H02M 3/335

(54) **VERFAHREN ZUM SCHALTEN EINER GETAKTETEN SPERRWANDLERSCHALTUNG, SPERRWANDLERSCHALTUNG**
METHOD FOR TOGGLING A FLYBACK CONVERTER CIRCUIT, FLYBACK CONVERTER CIRCUIT
PROCÉDÉ DE CONNEXION D'UN CIRCUIT CONVERTISSEUR À TRANSFERT INDIRECT CADENCÉ, ET CIRCUIT CONVERTISSEUR À TRANSFERT INDIRECT

(30) Priorität: 06.06.2011 DE 102011103413
(43) Veröffentlichungstag der Anmeldung: 16.04.2014
(73) Patentinhaber: Tridonic GmbH & Co. KG, 6851 Dornbirn (AT)
(72) Erfinder: MOOSMANN, Florian, A-6850 Dornbirn (AT); TROPPACHER, Rainer, A-6850 Dornbirn (AT); SANDHOLZER, Markus, A-6844 Altach (AT)
(74) Vertreter: Banzer, Hans-Jörg
(86) Internationale Anmeldenummer: PCT/AT2012/000158
(87) Internationale Veröffentlichungsnummer: WO 2012/167294

(56) Entgegenhaltungen:
- JP-A- 9 308 239
- JP-A- 11 170 047
- JP-A- 2002 136 114
- US-A- 5 101 334

## Beschreibung

Die vorliegende Erfindung betrifft ein Verfahren zum Schalten einer getakteten Sperrwandlerschaltung, eine entsprechende Sperrwandlerschaltung sowie eine Heizschaltung für eine zu heizende Wendel eines Leuchtmittels, insbesondere einer Gasentladungslampe, mit einer derartigen Sperrwandlerschaltung.

Sperrwandler, welche auch als "Flyback"-Konverter bezeichnet werden, dienen zur galvanisch entkoppelten Übertragung von elektrischer Energie von einer Eingangsseite zu einer Ausgangsseite. Da Sperrwandler in der Lage sind, eine Eingansspannung effizient mit einem geringen schaltungstechnischen Aufwand in ein definiertes Ausgangsspannungsniveau umzusetzen, werden sie in verschiedensten Anwendungen zur Strom.- oder Spannungsversorgung, wie beispielsweise in getakteten Schaltnetzteilen, eingesetzt.

Bei getakteten Sperrwandlern werden steuerbare Schalter, welche vorzugsweise in Form von Leistungsschaltern ausgestaltet sind, verwendet, um abhängig von dem Schalterzustand auf der Eingangsseite des Sperrwandlers elektrische Energie zu speichern und diese auf die Ausgangsseite der Sperrwandlers zu übertragen. Eine galvanisch entkoppelte Energieübertragung kann durch Verwendung eines Transformators oder Übertragers erzielt werden, wobei mit jedem Schaltzyklus in einer Primärwicklung des Transformators Energie gespeichert und auf die Sekundärseite des Transformators übertragen wird. Bei primärgetakteten Schaltnetzteilen mit dieser Sperrwandler-Topologie ist mindestens ein Schalter auf der Primärseite des Transformators vorhanden bzw. mit der Primärwicklung gekoppelt.

Sperrwandler der zuvor beschriebenen Art werden auch in Schaltungen zum Speisen, Vorheizen oder Zuheizen der Wendeln von Leuchtmitteln, insbesondere von Gasentladungslampen wie beispielsweise Leuchtstofflampen oder Leuchtdioden, eingesetzt, wie sie beispielsweise in elektronischen Vorschaltgeräten für Gasentladungslampen oder Leuchtdioden bzw. in sonstigen Betriebsgeräten für derartige Leuchtmittel verwendet werden. Dabei kann die Eingangsspannung des Sperrwandlers beispielsweise aus einer Busspannung oder Zwischenkreisspannung des entsprechenden elektronischen Vorschaltgeräts abgeleitet sein, wobei die Eingangsspannung mit Hilfe des Sperrwandlers in eine beispielsweise zum Heizen einer Wendel oder mehrerer Wendeln des jeweiligen Leuchtmittels geeignete Heizspannung umgesetzt wird.
Bei Verwendung von getakteten Sperrwandlern in derartigen Heizschaltungen kann jedoch das Problem auftreten, dass der Heizstrom des Sperrwandlers von Wandler zu Wandler variiert, wobei Hauptursache hierfür die unterschiedlichen Wickelkapazitäten der Transformatoren sind. Die Wickelkapazität kann um bis zu 50% von Sperrwandler zu Sperrwandler variieren. Beim Ausschalten des Schalters des Sperrwandlers fällt der Strom nicht abrupt auf Null ab, sondern es kommt in der Regel aufgrund des durch die Induktivität und die Wickelkapazität des Transformators auf der Primärseite des Transformators gebildeten Schwingkreises zu einem Oszillieren des Stroms um die Nulllinie. Verändert sich die Wickelkapazität, hat dies eine entsprechende Veränderung der Oszillations- oder Schwingungsfrequenz des bei einem Ausschaltvorgang durch den Schalter fließenden Reststroms zur Folge, was wiederum zur Folge hat, dass bei Verwendung unterschiedlicher Sperrwandler gegebenenfalls das nächste Wiedereinschalten des Schalters bei unterschiedlichen Zuständen des durch den Schalter fließenden Stroms erfolgt, so dass schlussendlich der Heizstrom entsprechend variiert. Beispielsweise kann bei dem einen Sperrwandler ein Wiedereinschalten des Schalters erfolgen, wenn der Reststrom augenblicklich Null beträgt, während bei dem anderen Sperrwandler das Wiedereinschalten erfolgt, wenn der durch den Schalter fließende Reststrom gerade einen der Schwingungsamplitude entsprechenden Maximalwert erreicht hat.
Allgemein erfordern die immer strengeren Vorgaben der Lampenhersteller ein möglichst exaktes und verlustfreies Schalten des Schalters der jeweils eingesetzten Sperrwandlers. Insbesondere wenn von den Lampenherstellern relativ strenge Grenzen für die Heizströme oder Betriebsströme gesetzt, wobei diese Ströme nicht so stark variieren dürfen.

Das Japanische Patent JP11170047 zeigt eine Sperrwandlerschaltung mit den in den Oberbegriffen der Ansprüche 1 und 6 festgelegten Merkmale.

Der vorliegenden Erfindung liegt daher die Aufgabe zugrunde, ein Verfahren zum Schalten eines getakteten Sperrwandlers sowie eine entsprechend ausgestaltete Sperrwandlerschaltung bereitzustellen, womit allgemein Störungen und Verluste beim Schalten des Sperrwandlers vermieden oder zumindest reduziert werden können. Insbesondere liegt der Erfindung die Aufgabe zugrunde, ein Verfahren zum Schalten eines getakteten Sperrwandlers sowie eine entsprechende Sperrwandlerschaltung zum Einsatz in einer Heizschaltung zum Heizen mindestens einer Wendel eines Leuchtmittels bereitzustellen, wobei die zuvor beschriebenen Variationen des von dem Sperrwandler gelieferten Heizstroms beseitigt oder zumindest minimiert werden können.
Diese Aufgabe wird erfindungsgemäß durch ein Verfahren zum Schalten eines getakteten Sperrwandlers gemäß Anspruch 1 und eine getaktete Sperrwandlerschaltung gemäß Anspruch 6 gelöst. Die abhängigen Ansprüche definieren vorteilhafte Ausführungsformen der Erfindung.
Erfindungsgemäß wird bei einer getakteten Sperrwandlerschaltung, die einen Transformator zur galvanisch entkoppelten Übertragung von elektrischer Energie von einer Primärseite zu einer Sekundärseite und einen steuerbaren Schalter zur Taktung aufweist, der durch den Schalter fließende Strom überwacht. Wird nach einem Ausschaltvorgang, festgestellt, dass der Strom durch den Schalter einen vordefinierten Stromwert erreicht hat, wird der Schalter angesteuert, um einen neuen Schaltvorgang, insbesondere einen neuen Einschaltvorgang, durchzuführen.
Auf diese Weise ist gewährleistet, dass beispielsweise nach einem Ausschalten des Schalters der Schalter stets bei Erreichen desselben vordefinierten Stromwerts wieder eingeschaltet wird, so dass unabhängig von der Wickelkapazität des Transformators des getakteten Sperrwandlers und dem daraus resultierenden oszillierenden Stromverlauf nach einem Ausschalten des Schalters ein Einschaltvorgang stets unter denselben definierten Betriebsbedingungen betreffend den durch den Schalter fließenden Strom durchgeführt wird. Somit kann von dem getakteten Sperrwandler unabhängig von der Wickelkapazität des eingesetzten Transformators ein gleichbleibender Strom auf der Sekundärseite zur Verfügung gestellt werden.

Mit Hilfe der Erfindung ist somit ein definiertes Schalten des getakteten Sperrwandlers möglich, wobei Störungen und Verluste vermieden bzw. zumindest minimiert werden können.

Bei dem Stromwert, bei dessen Erreichen der Schalter erneut geschaltet wird, handelt es sich vorzugsweise um Null, d.h. der Schalter wird vorzugsweise zu einem Zeitpunkt angesteuert, wenn der Strom die Nulllinie erreicht hat. (so genanntes "Zero Crossing"), da ein derartiger Nulldurchgang einfach erfasst werden kann.

Vorzugsweise wird die Erfindung in einer Heizschaltung für mindestens eine Wendel eines Leuchtmittels, insbesondere einer Gasentladungslampe wie einer Leuchtstofflampe, eingesetzt, welche wiederum in einem elektronischen Vorschaltgerät oder in einem sonstigen Betriebsgerät verwendet werden kann. Aufgrund der zuvor beschriebenen Ausgestaltung der Erfindung ist in diesem Fall gewährleistet, dass auch bei unterschiedlichen Wickelkapazitäten von in dem Sperrwandler verwendeten Transformatoren kein Offset bei dem von der Heizschaltung zur Verfügung gestellten Heizstrom auftritt, d.h. die Heizschaltung liefert stets denselben Strom. Die Erfindung ist jedoch nicht auf diesen bevorzugten Anwendungsfall beschränkt. Grundsätzlich ist ein Einsatz der Erfindung nicht nur in Heizschaltungen, sondern auch in anderen Anwendungen von getakteten Sperrwandlerschaltungen möglich. Beispielsweise kann eine derartige getakteten Sperrwandlerschaltung als zum direkten oder indirekten Speisen einer Leuchtdiode genutzt werden.

Gemäß einer bevorzugten Ausführungsform wird der durch den Schalter fließende Strom mit Hilfe eines Widerstands erfasst, welcher mit dem steuerbaren Schalter gekoppelt ist. Bei diesem Widerstand kann es sich insbesondere um denselben Widerstand handeln, welcher in der Heizschaltung auch zu anderen Zwecken, z.B. zur Überstromerkennung oder zur Wendlerkennung verwendet wird, so dass die Überwachungsfunktion ohne zusätzlichem schaltungstechnischen Aufwand realisiert werden kann.

Ebenso ist jedoch auch denkbar, den Strom auf andere geeignete Art und Weise zu überwachen, beispielsweise durch Auswertung der über den steuerbaren Schalter abfallenden Spannung.

Die Erfindung wird nachfolgend näher unter Bezugnahme auf die beigefügte Zeichnung anhand bevorzugter Ausführungsbeispiele erläutert.
Fig. 1 zeigt eine schematische Darstellung einer getakteten Sperrwandlerschaltung gemäß einer bevorzugten Ausführungsform der Erfindung, wobei die getaktete Sperrwandlerschaltung in einer Heizschaltung zum Heizen einer Wendel einer Gasentladungslampe verwendet wird,
Fig. 2 zeigt ein vereinfachtes Blockschaltbild zur Erläuterung eines möglichen Einsatzes der in Fig. 1 gezeigten Heizschaltung in einem elektronischen Vorschaltgerät,
Fig. 3 zeigt Darstellungen zur Erläuterung eines nach einem Ausschaltvorgang der getakteten Sperrwandlerschaltung auftretenden oszillierenden Stromverlaufs, und
Fig. 4 zeigt eine schematische Darstellung einer getakteten Sperrwandlerschaltung gemäß einer weiteren Ausführungsform der Erfindung.

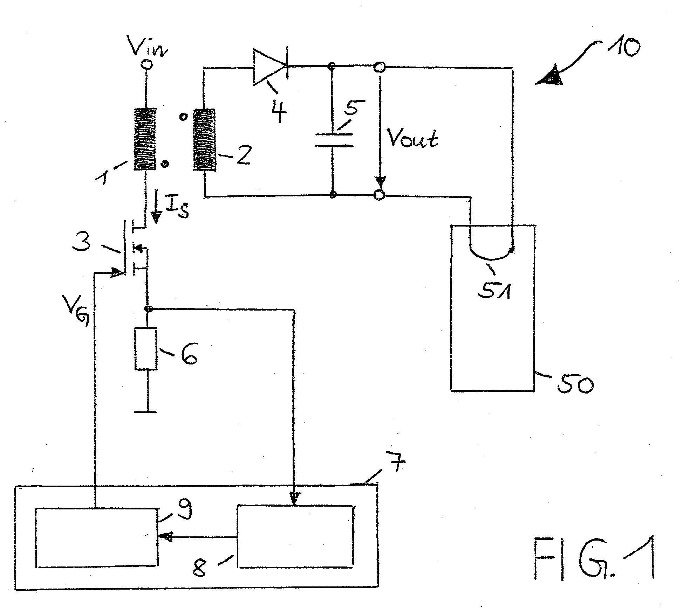

In Fig. 1 ist eine Heizschaltung 10 zum Vorheizen oder Zuheizen einer Wendel 51 eines Leuchtmittels, wie beispielsweise einer Gasentladungslampe, mit einer bevorzugten Ausführungsform einer getakteten Sperrwandlerschaltung gemäß der vorliegenden Erfindung dargestellt.

Die in Fig. 1 gezeigte getaktete Sperrwandlerschaltung umfasst einen Transformator mit einer Primärwicklung oder Primärspule 1 und einer Sekundärwicklung oder Sekundärspule 2, wobei der Transformator zur Übertragung von elektrischer Energie von einer mit einer Eingangsspannung Vin versorgten Primärseite, welche mit der Primärwicklung 1 verbunden ist, zu einer mit der Sekundärwicklung 2 verbundenen Sekundärseite dient, um an Ausgangsanschlüssen eine Ausgangsspannung Vout für das Beheizen der Heizwendel 51 zur Verfügung zu stellen. Die Primärseite weist einen mit der Primärwicklung 1 in Serie geschalteten steuerbaren Leistungsschalter 3 auf, welcher durch einen MOS-Feldeffekttransistor (MOSFET) realisiert ist. Grundsätzlich sind jedoch auch andere Ausgestaltungen des Schalters 3 denkbar, wie beispielsweise Bipolartransistoren oder BJT-Transistoren. Die Sekundärwicklung 2 des Transformators ist in Serie mit einer Diode 4 geschaltet, welche wiederum mit einem Speicherkondensator 5 gekoppelt ist, der parallel zu den Ausgangsanschlüssen des Sperrwandlers angeordnet ist und die Ausgangsspannung Vout bereitstellt.

Bei dem dargestellten Ausführungsbeispiel ist lediglich eine Sekundärspule 2 zum Heizen einer Wendel 51 vorgesehen. Mit der Primärspule 1 können jedoch auch zwei oder mehr Sekundärspulen mit entsprechenden sekundären Heizkreisen vorgesehen sein, wobei jeder dieser sekundären Heizkreise ähnlich zu dem in Fig. 1 gezeigten sekundären Heizkreis ausgestaltet und mit einer entsprechenden Wendel verbunden sein kann, so dass die in Fig. 1 gezeigte Heizschaltung ohne weiteres zum Heizen von zwei oder mehr Wendeln erweitert werden kann.

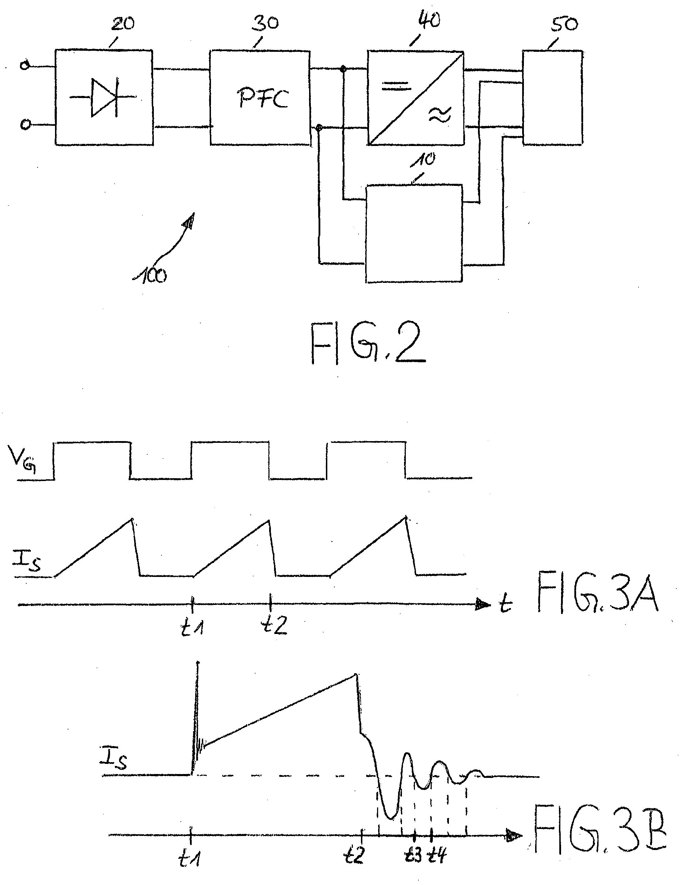

Fig. 2 zeigt beispielhaft die Anbindung einer derartigen Heizschaltung 10 an ein elektronisches Vorschaltgerät 100. Das elektronische Vorschaltgerät 100 umfasst eine Gleichrichterschaltung 20, welche eine eingangsseitige Versorgungsspannung, beispielsweise Netzspannung, gleichrichtet. Die von der Gleichrichterschaltung 20 zur Verfügung gestellte Spannung wird in einer Leistungsfaktorkorrekturschaltung ("Power Factor Correction") 30 einer Oberwellenfilterung unterzogen und somit geglättet. Mit der Leistungsfaktorkorrekturschaltung 30 ist eine Wechselrichterschaltung 40 gekoppelt, welche die Zwischenkreisspannung oder Busspannung der Leistungsfaktorkorrekturschaltung 30 in eine für den Betrieb des Leuchtmittels 50 geeignete Ausgangswechselspannung umsetzt. Die Heizschaltung 10 kann ebenfalls mit der Leistungsfaktorkorrekturschaltung 30 gekoppelt sein, so dass die in Fig. 1 gezeigte Eingangsspannung Vin der Zwischenkreisspannung oder Busspannung entspricht. Ebenso kann jedoch die Eingangsspannung Vin der Heizschaltung 10 auch von anderen Komponenten eingespeist werden.

Die Erfindung ist nicht auf den Einsatz in Heizschaltungen beschränkt, sondern kann auch auf jede andere Anwendung einer getakteten Sperrwandlerschaltung der zuvor beschriebenen Art übertragen werden.

Der steuerbare Schalter 3, welcher gemäß Fig. 1 zwischen die Primärspule 1 und einen mit Masse verbundenen Shunt-Widerstand 6 geschaltet ist, wird von einer Steuereinheit 7 angesteuert, welche diesen durch entsprechende Einstellung der Gate-Spannung V_{G} des als MOSFET ausgestalteten Schalters 3 zur Taktung des Sperrwandlers selektiv mit einer bestimmten Frequenz und Einschaltdauer einschaltet und wieder ausschaltet. Ist der Schalter 3 eingeschaltet, fließt über die Primärwicklung 1 und den Schalter 3 ein linear ansteigender Strom I_{S}, so dass elektrische Energie in der Primärwicklung 1 gespeichert wird. Beim Öffnen des Schalters 3 wird in der Sekundärwicklung 2 eine dieser in der Primärwicklung 1 gespeicherten Energie entsprechende Spannung induziert, welche von der Diode 4 gleichgerichtet und von dem Kondensator 5 gefiltert wird, so dass schließlich die an dem Kondensator 5 auftretende Spannung als Ausgangsspannung Vout des Sperrwandlers bereitgestellt wird.

Die am Schalter 3 auftretende Spannung, welche im vorliegenden Beispiel der Drain-Source-Spannung V_{DS} des als MOSFET ausgebildeten Schalters entspricht, ist im eingeschalteten Zustand des Schalters 3 Null und steigt bei Ausschalten bzw. Öffnen des Schalters 3 an, bis die Diode 4 leitend wird.

Fig. 3A zeigt beispielhaft einen Verlauf des Stroms I_{S} durch den Schalter 3 zusammen mit dem entsprechenden Verlauf der Gate-Spannung V_{G}, welche das Einschalten bzw. Ausschalten des Schalters 3 repräsentiert. Nach einem Einschalten des Schalters 3 (beispielsweise zu dem in Fig. 3A gezeigten Zeitpunkt t1), d.h. im geschlossenen Zustand, steigt der Strom I_{S} durch den Schalter 3 linear an. Wird der Schalter 3 ausgeschaltet, d.h. geöffnet, fällt der Strom wieder auf Null ab. Nachdem der Schalter 3 geöffnet wurde, kann kein direkter Strom mehr durch den Schalter 3 fließen. Aufgrund der Magnetisierung des Transformators fließt dann sekundärseitig über die Sekundärwicklung 2 ein Strom, bis zu dem Zeitpunkt der Entmagnetisierung des Transformators.

An der Primärwicklung 1 kann es durch das Öffnen des Schalters 3 zu hohen Spannungen kommen, da der Strom durch die Primärwicklung 1 abrupt unterbrochen wird. Zusätzlich kann von der Sekundärwicklung 2 eine Spannung rückgekoppelt werden. Aufgrund der parasitären Kapazitäten des Schalters 3 beispielsweise MOSFET 3 kann diese Spannungsüberhöhung, die nach dem Öffnen des Schalters 3 über dem Schalter 3 auftreten kann, auch am Shunt-Widerstand 6 erfasst werden (da auch in der Ausschaltphase ein Strom verlauf I_{S} durch den Shunt-Widerstand 6 fließt).

Wie jedoch in der vergrößerten Darstellung von Fig. 3B gezeigt ist, kommt es beim Ausschalten des Schalters 3 im Stromverlauf I_{S} zu Oszillationsschwingungen, welche durch einen durch die Wickelkapazität und die Induktivität der Primärspule 1 gebildeten Schwingkreis hervorgerufen werden.

Um ein möglichst störungsfreies und verlustfreies Schalten des Schalters 3 und zudem unabhängig von der Wickelkapazität, welche über einen weiten Bereich variieren kann, einen möglichst nicht variierenden Ausgangsstrom bereitzustellen, wird der durch den Schalter 3 fließende Strom I_{S} von einer Überwachungseinrichtung 8 der Steuereinheit 7 überwacht, wobei die Überwachungseinrichtung 8 insbesondere erfasst, wann ein Nulldurchgang des Strom I_{S} nach einem Ausschalten des Schalters 3 auftritt. Nur bei Feststellen eines derartigen Nulldurchgangs wird von der Überwachungseinrichtung 8 ein Steuersignal für eine Treibereinrichtung 9 erzeugt, um diese zu veranlassen, die Gate-Spannung V_{G} des Schalters 3 zum erneuten Einschalten des Schalters 3 entsprechend einzustellen. Bei dem in Fig. 3B beispielhaft gezeigten Stromverlauf würde somit der Schalter 3 nur zu den dargestellten Zeitpunkten t3 oder t4, zu welchen der Strom I_{S} jeweils die Nulllinie kreuzt, eingeschaltet werden. Unmittelbar nach dem Öffnen des Schalters 3 fließt wie bereits erwähnt aufgrund der Magnetisierung des Transformators sekundärseitig ein Strom, wobei während einer vorgebbaren Zeitspanne unmittelbar nach dem Öffnen vorzugsweise kein erneutes Schließen des Schalters 3 erfolgt, so dass bei dem in Fig. 3B dargestellten Ausführungsbeispiel der Schalter erst nach Ablauf dieser Zeitspanne zu den Zeitpunkten t3 bzw. t4 erneut eingeschaltet wird.

Gemäß einem weiteren Ausführungsbeispiel der Erfindung ist es auch möglich, dass die getaktete Sperrwandlerschaltung zur direkten oder indirekten Speisung einer Leuchtdiode (LED) genutzt wird. Beispielsweise können an der Sekundärseite des Transformators eine oder mehrere Leuchtdioden angeschlossen sein. Es wäre aber auch möglich, dass die getaktete Sperrwandlerschaltung einen nachgeschalteten Gleichspannungswandler, beispielsweise eine getaktete Konstantstromquelle, speist, und dieser nachgeschaltete Gleichspannungswandler dient zur Versorgung von einer oder mehrerer Leuchtdioden. Ein derartiger Gleichspannungswandler kann beispielsweise ein Tiefsetzsteller oder eine resonante Halbbrückenschaltung, vorzugsweise mit Stromregelung, sein.

Bei dem in Fig. 1 gezeigten Ausführungsbeispiel erfolgt die Überwachung des Schalterstroms I_{S} mit Hilfe des Shunt-Widerstands 6, wobei die an dem Shunt-Widerstand 6 auftretende Spannung in der Überwachungseinrichtung 8 ausgewertet wird. Der Shunt-Widerstand 6 bzw. die dort auftretenden Strom- und Spannungswerte können zudem für andere Zwecke ausgewertet werden, beispielsweise zur Überstromerkennung oder zur Erkennung der an die Sekundärseite angeschlossenen Last, d.h. bei dem dargestellten Beispiel der Heizschaltung 10 zur Erkennung der jeweils angeschlossenen zu beheizenden Wendel 51 oder auch im Falle einer Leuchtdiode als Last einer Typerkennung beispielsweise der Farbe oder der Leistung der Leuchtdiode.

Alternativ kann der Strom beispielsweise auch durch Erfassen und Auswerten der am Schalter 3 auftretenden Spannung V_{DS} überwacht werden., wobei zu berücksichtigen ist, dass die Spannung um 90° vorauseilend bzw. der Strom um 90° nacheilend sein kann.

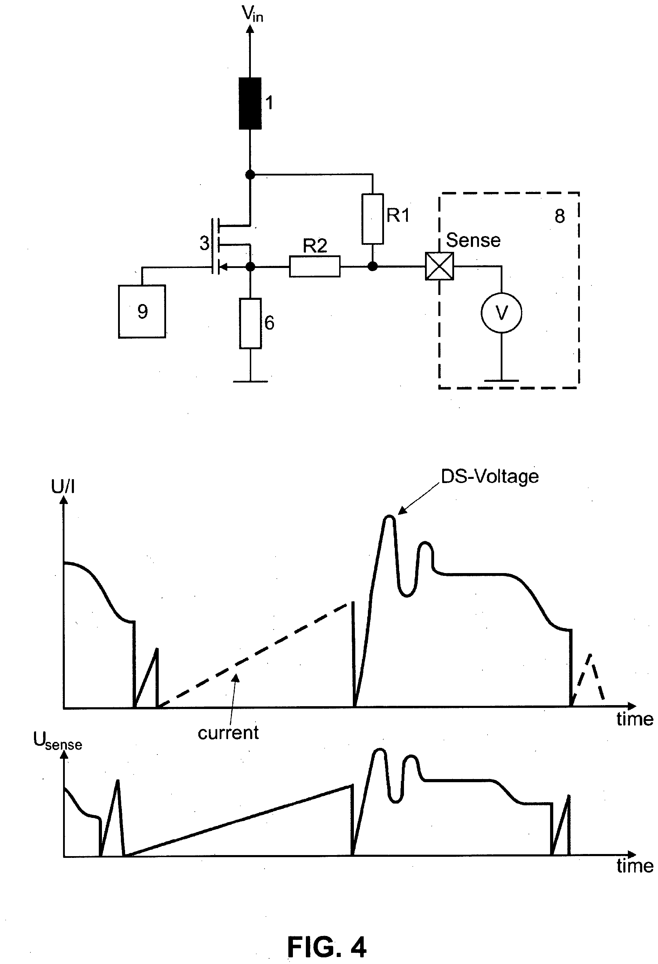

In Fig. 4 ist eine schematische Darstellung einer getakteten Sperrwandlerschaltung gemäß einer weiteren Ausführungsform der Erfindung dargestellt. Die in Fig. 4 gezeigte getaktete Sperrwandlerschaltung umfasst einen Transformator mit einer Primärwicklung oder Primärspule 1 und einer hier nicht dargestellten Sekundärwicklung oder Sekundärspule 2.

Der Transformator dient zur Übertragung von elektrischer Energie von einer mit einer Eingangsspannung Vin versorgten Primärseite, welche mit der Primärwicklung 1 verbunden ist, zu einer mit der Sekundärwicklung 2 verbundenen Sekundärseite, um an Ausgangsanschlüssen eine Ausgangsspannung Vout beispielsweise für das Beheizen einer Heizwendel oder auch zur Speisung einer Leuchtdiode zur Verfügung zu stellen.

Die Primärseite weist einen mit der Primärwicklung 1 in Serie geschalteten steuerbaren Leistungsschalter 3 auf, welcher hier durch einen MOS-Feldeffekttransistor (MOSFET) realisiert ist. Grundsätzlich sind jedoch auch andere Ausgestaltungen des Schalters 3 denkbar, wie beispielsweise Bipolartransistoren oder BJT-Transistoren. Der steuerbare Schalter 3 wird von einer Steuereinheit 7 angesteuert, welche diesen im Normalbetrieb durch entsprechende Einstellung der Gate-Spannung VG des als MOSFET ausgestalteten Schalters 3 zur Taktung des Sperrwandlers selektiv mit einer bestimmten Frequenz und Einschaltdauer einschaltet und wieder ausschaltet.

In Serie mit dem steuerbaren Schalter 3 ist auch gemäß Fig. 4 ein mit Masse verbundener Shunt-Widerstand 6 geschaltet. Weiterhin ist zur Messung der Spannung über dem Schalter 3 auftretenden Spannung, welche im vorliegenden Beispiel der Drain-Source-Spannung VDS des als MOSFET ausgebildeten Schalters 3 entspricht, ein Widerstand R1 angeordnet. Dieser Widerstand R1 ist mit einem Anschuß mit dem Anschlußpunkt des Schalters 3 an die Primärwicklung 1 verbunden. Der andere Anschluß des Widerstands R1 ist mit einem Messeingang der Steuereinheit 7 bzw. der Auswertungseinrichtung 8 verbunden sowie mit einem weiteren Widerstand R2. Der weitere Widerstand R2 ist zum einen mit einem Anschluß des Widerstands R1 verbunden und zum anderen mit dem Verbindungspunkt von Shunt-Widerstand 6 und Schalter 3. Die beiden Widerstände R1 und R2 sind im Vergleich zum Shunt-Widerstand 6 relativ hochohmig ausgelegt. In diesem Beispiel erfolgt somit eine direkte Erfassung der Spannung VDS über dem Schalter 3.

Ist der Schalter 3 eingeschaltet, fließt über die Primärwicklung 1 und den Schalter 3 ein linear ansteigender Strom IS, so dass elektrische Energie in der Primärwicklung 1 gespeichert wird (sie wird aufmagnetisiert). Dieser Stromfluß kann durch Shunt-Widerstand 6 erfasst werden. Der parallel angeordnete Widerstand R1 wird in dieser Phase durch den sehr niederohmigen Schalter 3 überbrückt, solange der Schalter 3 eingeschaltet ist. Beim Öffnen des Schalters 3 wird dieser sehr hochohmig, nun kann über den Widerstandsteiler R1, R2 und 6 die über dem Schalter 3 abfallende Spannung mittels des Messeingangs Sense durch die Auswertungseinrichtung 8 erfasst werden.

In Fig. 4 unten ist der Verlauf der am Messeingang Sense erfassten Spannung dargestellt. Im Unterschied zu dem in Fig. 3 gezeigten Beispiel ergibt sich während der Ausschaltphase des Schalters 3 aufgrund der Widerstände R1 und R2 eine höhere Amplitude der Spannung. Bei dem Beispiel gemäß Fig. 4 werden die Widerstände R1 und R2 als ohmscher Spannungsteiler genutzt, während bei dem Beispiel der Fig. 1 die parasitären Kapazitäten des ausgeschalteten Schalters 3 genutzt werden, um auf die Spannung über dem Schalter 3 zu schließen.

Die Erfindung kann sich auch auf eine nicht potentialgetrennte Sperrwandlerschaltung beziehen. In diesem Fall ist anstelle des Transformators nur eine Spule als Induktivität vorhanden, die sowohl die Funktion der Primärwicklung als auch der Sekundärwicklung des Transformators übernimmt. In diesem Fall liegt eine getaktete Sperrwandlerschaltung vor, welche eine Induktivität aufweist, wobei die getaktete Sperrwandlerschaltung derart ausgestaltet ist, dass sie in einem Normalbetrieb elektrische Energie durch wiederholtes Einschalten und Ausschalten von einem mit der Induktivität verbundenen Schalter 3 überträgt, und eine Steuereinheit 7 zum Ansteuern des Schalters 3 der getakteten Sperrwandlerschaltung. Durch das durch wiederholte Einschalten und Ausschalten des Schalters 3 wird die Induktivität auf- und entmagnetisiert und somit elektrische Energie übertragen. Dabei ist eine Erfassungseinrichtung zum direkten oder indirekten Erfassen einer Spannung an dem Schalter 3 nach einem Ausschalten des Schalters 3 vorhanden.

Wie zuvor erläutert worden ist, wird nach dem Ausschalten des Schalters 3 als Triggerereignis für das nächste Einschalten des Schalters ein Nulldurchgang des Stroms I_{S} erfasst. Ebenso ist jedoch auch möglich, dass der Schalter 3 bei Erreichen eines anderen vordefinierten Stromwerts eingeschaltet wird, solange gewährleistet ist, dass der Schalter 3 immer nur bei diesem einen definierten Stromwert eingeschaltet wird.

## Patentansprüche

1. Verfahren zum Schalten einer getakteten Sperrwandlerschaltung,
wobei die Sperrwandlerschaltung einen Transformator mit einer Primärwicklung (1) und einer Sekundärwicklung (2) umfasst und mit Hilfe des Transformators elektrische Energie von einer mit der Primärwicklung (1) verbundenen Primärseite zu einer mit der Sekundärwicklung (2) verbundenen Sekundärseite übertragen wird, wobei die Primärseite mit einem Schalter (3) getaktet ist, und
wobei ein Strom (I_{S}) durch den Schalter (3) überwacht wird,
**gekennzeichnet durch** die Schritte
Erfassen, wann der Strom (I_{S}) nach einem Ausschalten des Schalters (3) einen vordefinierten Stromwert erreicht hat, und
erneutes Einschalten des Schalters (3), wenn der Strom den vordefinierten Stromwert erreicht hat.

2. Verfahren nach Anspruch 1,
**dadurch gekennzeichnet,**
**dass** der vordefinierte Stromwert Null ist, so dass der Schalter (3) beim Erfassen eines Nulldurchgangs des Stroms (I_{S}) eingeschaltet wird.

3. Verfahren nach einem der vorhergehenden Ansprüche,
**dadurch gekennzeichnet,**
**dass** der Strom (I_{S}) durch den Schalter (3) durch Erfassen einer an einem mit dem Schalter (3) gekoppelten Widerstand (6) auftretenden Spannung überwacht wird.

4. Verfahren nach Anspruch 3,
**dadurch gekennzeichnet,**
**dass** die an dem Widerstand (6) auftretende Spannung zudem zur Erkennung einer an die Sekundärseite angeschlossenen Last (51) oder zur Überstromerkennung ausgewertet wird.

5. Verfahren nach einem der Ansprüche 1-2,
**dadurch gekennzeichnet,**
**dass** der Strom (I_{S}) durch den Schalter (3) durch Erfassen einer an dem Schalter (3) auftretenden Spannung (V_{DS}) überwacht wird.

6. Getaktete Sperrwandlerschaltung, umfassend
einen Transformator mit einer Primärwicklung (1), welche mit einer Primärseite des Sperrwandlers verbunden ist, und einer Sekundärwicklung (2), welche mit einer Sekundärseite des Sperrwandlers verbunden ist, um elektrische Energie von der Primärseite zu der Sekundärseite zu übertragen,
einen mit der Primärseite gekoppelten steuerbaren Schalter (3), und
eine Steuereinheit (7) zum Ansteuern des Schalters (3), welche derart ausgestaltet ist, dass sie einen Strom (I_{S}) durch den Schalter (3) überwacht,
**dadurch gekennzeichnet,**
**dass** die Steuereinheit (7) derart ausgestaltet ist, dass sie, wenn der Strom (I_{S}) nach einem Ausschalten des Schalters (3) einen vordefinierten Stromwert erreicht hat, den Schalter (3) ansteuert, um den Schalter (3) erneut einzuschalten.

7. Getaktete Sperrwandlerschaltung nach Anspruch 6,
**dadurch gekennzeichnet,**
**dass** der vordefinierte Stromwert Null ist, so dass die Steuereinheit (7) den Schalter (3) bei Erfassen eines Nulldurchgangs des Stroms (I_{S}) ansteuert, um den Schalter (3) einzuschalten.

8. Getaktete Sperrwandlerschaltung nach einem der Ansprüche 6-7,
**dadurch gekennzeichnet,**
**dass** mit dem Schalter (3) ein Widerstand (6) gekoppelt ist, und
**dass** die Steuereinheit (7) derart ausgestaltet ist, dass sie den Strom (I_{S}) durch den Schalter (3) durch Erfassen einer an dem Widerstand (6) auftretenden Spannung überwacht.

9. Getaktete Sperrwandlerschaltung nach Anspruch 8,
**dadurch gekennzeichnet,**
**dass** die Steuereinheit (7) derart ausgestaltet ist, dass sie die an dem Widerstand (6) auftretende Spannung zudem zur Überstromerkennung oder zur Erkennung einer mit der Sekundärseite der Sperrwandlerschaltung gekoppelten Last (51) auswertet.

10. Getaktete Sperrwandlerschaltung nach einem der Ansprüche 6-7,
**dadurch gekennzeichnet,**
**dass** die Steuereinheit (7) derart ausgestaltet ist, dass sie den Strom (I_{S}) durch den Schalter (3) durch Erfassen einer an dem Schalter (3) auftretenden Spannung (V_{DS}) überwacht.

11. Heizschaltung (10) zum Heizen mindestens einer Wendel (51) des Leuchtmittels (50),
mit einer getakteten Sperrwandlerschaltung nach einem der Ansprüche 6-10,
wobei die getaktete Sperrwandlerschaltung Heizenergie von der Primärseite der Sperrwandlerschaltung zu der Sekundärseite der Sperrwandlerschaltung, welche mit der mindestens einen Wendel (51) des Leuchtmittels (50) gekoppelt ist, überträgt.

12. Heizschaltung (10) nach Anspruch 11,
**dadurch gekennzeichnet,**
**dass** die Heizschaltung zum Heizen mindestens einer Wendel (51) einer Gasentladungslampe (50) ausgestaltet ist.

13. Betriebsgerät oder elektronisches Vorschaltgerät (100) für ein Leuchtmittel (50) mit einer Heizschaltung (10) nach Anspruch 11 oder 12.

## Claims

1. A method for toggling a clocked flyback converter circuit,
wherein the flyback converter circuit comprises a transformer with a primary winding (1) and a secondary winding (2) and by means of the transformer electrical energy is transmitted from a primary side connected with the primary winding (1) to a secondary side connected with the secondary winding (2), wherein the primary side is clocked with a switch (3), and
wherein a current (Iₛ) through the switch (3) is monitored,
**characterized by** the steps
detect, when after a deactivation of the switch (3) the current (Iₛ) has reached a predefined current value, and
turn the switch (3) on again, if the current has reached the redefined current value.

2. A method according to Claim 1,
**characterized in**
**that** the predefined current value is zero, so that the switch (3) is turned on upon detection of a zero crossing of the current (Iₛ).

3. A method according to any one of the preceding claims,
**characterized in**
**that** the current (Iₛ) through the switch (3) is monitored by detection of a voltage occurring on a resistor (6) coupled with the switch (3).

4. A method according to Claim 3,
**characterized in**
**that** the voltage occurring on the resistor (6) is also evaluated to identify a load (51) connected to the secondary side or to identify overcurrent.

5. A method according to any one of Claims 1-2,
**characterized in**
**that** the current (Iₛ) through the switch (3) is monitored by detection of a voltage (V_{DS}) occurring on the switch (3).

6. A clocked flyback converter circuit, comprising
a transformer with a primary winding (1), which is connected with a primary side of the flyback converter, and with a secondary winding (2), which is connected with a secondary side of the flyback converter, in order to transmit electrical energy from the primary side to the secondary side,
a controllable switch (3) coupled with the primary side, and a control unit (7) for actuating the switch (3), which is designed in such a manner that it monitors a current (Iₛ) through the switch (3),
**characterized in**
**that** the control unit (7) is designed in such a manner that if after a deactivation of the switch (3) the current (Iₛ) has reached a predefined current value, it actuates the switch (3), in order to turn on the switch again (3).

7. A clocked flyback converter circuit according to Claim 6,
**characterized in**
**that** the predefined current value is zero, so that the control unit (7) actuates the switch (3) upon detection of a zero crossing of the current (Iₛ), in order to turn on the switch (3).

8. A clocked flyback converter circuit according to any one of Claims 6-7,
**characterized in**
**that** a resistor (6) is coupled with the switch (3), and that the control unit (7) is designed in such a manner that it monitors the current (Iₛ) through the switch (3) by detecting a voltage occurring on the resistor (6).

9. A clocked flyback converter circuit according to Claim 8,
**characterized in**
**that** the control unit (7) is designed in such a manner that it evaluates the voltage occurring on the resistor (6) likewise to identify overcurrent or to identify a load (51) coupled with the secondary side of the flyback converter circuit.

10. A clocked flyback converter circuit according to any one of Claims 6-7,
**characterized in**
**that** the control unit (7) is designed in such a manner that it monitors the current (Iₛ) through the switch (3) by detecting a voltage (V_{DS}) occurring on the switch (3).

11. A heating circuit (10) for heating at least one coil filament (51) of the lighting means (50),
having a clocked flyback converter circuit according to any one of Claims 6-10,
wherein the clocked flyback converter circuit transmits heat energy from the primary side of the flyback converter circuit to the secondary side of the flyback converter circuit, which is coupled with the at least one coil filament (51) of the lighting means (50).

12. A heating circuit (10) according to Claim 11,
**characterized in**
**that** the heating circuit is designed to heat at least one coil filament (51) of the gas discharge lamp (50).

13. An operating device or electronic ballast (100) for a lighting means (50) with a heating circuit (10) according to Claim 11 or 12.

## Revendications

1. Procédé pour la commutation d'un circuit de convertisseur à oscillateur bloqué, le circuit de convertisseur à oscillateur bloqué comprenant un transformateur avec un enroulement primaire (1) et un enroulement secondaire (2) et, à l'aide du transformateur, une énergie électrique étant transmise d'un côté primaire relié à l'enroulement primaire (1) vers un côté secondaire relié à l'enroulement secondaire (2), le côté primaire étant cadencé avec un commutateur (3) et
un courant (Iₛ) à travers le commutateur (3) étant surveillé,
**caractérisé par** les étapes suivantes:
détection du moment où le courant (Iₛ) a atteint une valeur de courant prédéfinie après un arrêt du commutateur (3) et
remise en marche du commutateur (3) lorsque le courant a atteint la valeur de courant prédéfinie.

2. Procédé selon la revendication 1,
**caractérisé en ce que**
la valeur de courant prédéfinie est égale à zéro, de façon à ce que le commutateur (3) soit mis en marche lors de la détection d'un passage à zéro du courant (Iₛ).

3. Procédé selon l'une des revendications précédentes,
**caractérisé en ce que**
le courant (Iₛ) à travers le commutateur (3) est surveillé par la détection d'une tension apparaissant au niveau d'une résistance (6) couplée au commutateur (3).

4. Procédé selon la revendication 3,
**caractérisé en ce que**
la tension apparaissant au niveau de la résistance (6) est analysée en outre pour la détection d'une charge (51) connectée au côté secondaire ou pour la détection d'une surintensité.

5. Procédé selon l'une des revendications 1 à 2,
**caractérisé en ce que**
le courant (Iₛ) à travers le commutateur (3) est surveillé par la détection d'une tension (V_{DS}) apparaissant au niveau du commutateur (3).

6. Circuit de convertisseur à oscillateur bloqué cadencé comprenant :
un transformateur avec un enroulement primaire (1), qui est relié avec un côté primaire du convertisseur à oscillateur bloqué, et un enroulement secondaire (2), qui est relié avec un côté secondaire du convertisseur à oscillateur bloqué, afin de transmettre une énergie électrique du côté primaire au côté secondaire,
un commutateur (3) contrôlable couplé au côté primaire et
une unité de commande (7), pour la commande du commutateur (3), qui est conçue de façon à surveiller un courant (Iₛ) à travers le commutateur (3),
**caractérisé en ce que**
l'unité de commande (7) est conçue de façon à commander le commutateur (3) pour remettre en marche le commutateur (3) lorsque le courant (Iₛ) a atteint une valeur de courant prédéfinie après un arrêt du commutateur (3).

7. Circuit de convertisseur à oscillateur bloqué cadencé selon la revendication 6,
**caractérisé en ce que**
la valeur de courant prédéfinie est égale à zéro, de façon à ce que l'unité de commande (7) commande le commutateur (3) lors de la détection d'un passage à zéro du courant (Iₛ), afin de remettre en marche le commutateur (3).

8. Circuit de convertisseur à oscillateur bloqué cadencé selon l'une des revendications 6 à 7,
**caractérisé en ce que**
avec le commutateur (3), une résistance (6) est couplée et
l'unité de commande (7) est conçue de façon à surveiller le courant (Iₛ) à travers le commutateur (3) par la détection d'une tension apparaissant au niveau de la résistance (6).

9. Circuit de convertisseur à oscillateur bloqué cadencé selon la revendication 8,
**caractérisé en ce que**
l'unité de commande (7) est conçue de façon à analyser en outre la tension apparaissant au niveau de la résistance (6) pour la détection d'une surintensité ou pour la détection d'une charge (51) couplée au côté secondaire du circuit de convertisseur à oscillateur bloqué.

10. Circuit de convertisseur à oscillateur bloqué cadencé selon l'une des revendications 6 à 7
**caractérisé en ce que**
l'unité de commande (7) est conçue de façon à surveiller le courant (Iₛ) à travers le commutateur (3) par la détection d'une tension (V_{DS}) apparaissant au niveau du commutateur (3).

11. Circuit de chauffage (10) pour le chauffage d'au moins une spirale (51) du moyen d'éclairage (50),
avec un circuit de convertisseur à oscillateur bloqué cadencé selon l'une des revendications 6 à 10, le circuit de convertisseur à oscillateur bloqué cadencé transmettant une énergie de chauffage du côté primaire du circuit de convertisseur à oscillateur bloqué vers le côté secondaire du circuit de convertisseur à oscillateur bloqué, qui est couplé avec l'au moins une spirale (51) du moyen d'éclairage (50).

12. Circuit de chauffage (10) selon la revendication 11,
**caractérisé en ce que**
le circuit de chauffage est conçu pour le chauffage d'au moins une spirale (51) d'une lampe à décharge de gaz (50).

13. Appareil d'exploitation ou ballast électronique (100) pour un moyen d'éclairage (50) avec un circuit de chauffage (10) selon la revendication 11 ou 12.
